# EUROPEAN PATENT SPECIFICATION

(11) **EP 3 183 128 B1**
(45) Date of publication and mention of the grant of the patent: **23.05.2018**
(21) Application number: 16728756.4
(22) Date of filing: 25.04.2016
(51) Int. Cl.: B60C 23/04, H02K 7/18

(54) **A POWER GENERATION SYSTEM**
STROMERZEUGUNGSSYSTEM
SYSTÈME DE GÉNÉRATION DE PUISSANCE

(30) Priority: 04.11.2015 TR 201513740
(43) Date of publication of application: 28.06.2017
(73) Proprietor: Yeditepe Universitesi, 34755 Istanbul (TR)
(72) Inventor: TOPALOGLU, Nezih, 34755 Atasehir/Istanbul (TR); CIBLAK, Namik, 34755 Atasehir/Istanbul (TR)
(74) Representative: Dericioglu Kurt, Ekin
(86) International application number: PCT/TR2016/050125
(87) International publication number: WO 2017/078640

(56) References cited:
- US-A- 3 699 367
- US-A- 3 760 351
- US-A- 4 405 872

## Description

### Field of the Invention

The present invention relates to a power generation system which meets the power requirement of tire pressure monitoring systems and similar systems which may be provided in the tire.

### Background of the Invention

Most of the tire pressure monitoring systems (TPMS) used nowadays work with an electrochemical battery. After use for a certain period of time, the battery of the TPMS should be replaced. In fact, since in most TPMS the system is designed to be integrated, replacement of the battery is not possible, thus a new system should be purchased. Nowadays, battery life for TPMSs varies between 1 and 7 years. In large vehicles such as trucks and buses, pressure information should be communicated to larger distances in a wireless manner. This further reduces battery life of TPMS. Due to these reasons, instead of using a battery, a TPMS which generates its own energy (harvests energy) is much more advantageous compared to the TPMS with battery. In addition, considering the environmental effects, a TPMS that generates its own energy will be much more environment friendly than a TPMS running on a battery.

Many studies have been conducted on electric power generation mechanisms for TPMS. In some of these studies in the state of the art, an antenna/coil is planned to be placed near the wheel. European patent document no. EP 1 870 261 B1 and United States patent document no. US 7 245 208 B2 and US 7 363 806 can be given as examples to the patents granted in the related art. The purpose in the these studies is to provide energy of the TPMS in a wireless manner by placing an antenna/coil connected to the accumulator in a wired manner at a position near the wheel such as brake shoe. Surface Acoustic Wave based sensors are suggested s pressure sensors. This method can be successful if the future vehicle manufacturers integrate an antenna system which receives power from the accumulator and reaches the wheels. However, it does not seem possible to present this product as a solution to the vehicles which are currently in traffic.

Japanese patent document no. JPH08310207 (A), an application in the state of the art, discloses a tire pressure monitoring system which needs no electric power. In the said system, a transmitter is installed in the wheel. A magnet is installed on the car body side and around a wheel, and an electromagnetic induction part is installed on the wheel side so as to generate electromotor force owing to the magnet. It does not seem possible to present this product of the said invention as a solution to the vehicles which are currently in traffic.

United States patent application no. US 2014/0035438 A1, an application in the state of the art, suggests a flexible beam, having a mass at the tip thereof, hitting a piezo-electric beam at each rotation of the wheel and thereby the piezo-electric beam generating electricity. The power generated in this study is in microwatts. It is considered that this power will not be sufficient to drive TPMSs.

In the United States patent document no. US 2010/0083746 A1, an application in the state of the art, it is aimed to obtain energy by electromagnetic induction method using a swinging mechanism. A swinging mechanism is placed to a position other than the center of the tire, and the swinging mechanism is aimed not to participate in rotation of the wheel due to its weight and to serve as a stator. Thus, it is possible to convert the relative movement between the swinging mechanism (stator) and the wheel (rotor) to power. One of the problems in designs using swinging mechanism is that when the speed of the vehicle rises above a certain level, the centrifugal force acting on the swinging mechanism predominates and the swinging mechanism loses its stator feature and starts to rotate simultaneously with the wheel. This problem which will occur in high speeds can be eliminated by increasing the length and weight of the swinging mechanism. However, this will cause an increase in the weight and volume of the generator. Furthermore, the swinging mechanism can have a chaotic movement during travel of the vehicle and cause undesirable dynamic effects on the vehicle.

There are designs in the state of the art which generate power by utilizing tire deformation. In these designs, deformation of the surface of the tire contacting the ground due to the weight of the vehicle is used. Although amount of this deformation is affected by the vehicle weight, pressure level of the tires, temperature and similar conditions, a situation wherein there is no deformation is not expected. As the vehicle moves, a different area of the tire is deformed; and as the speed of the tire increases, frequency of deformation of the tire increases. Therefore, providing power to the TPMSs by using periodic deformation of the tire is an idea that has started to draw attention in the recent years.

Related to this idea, United States patent document no. US 2009/0134632 A1 discloses that power is generated by using the voltage resulting on the tire when it is deformed. Electric power obtained in the said study is sufficient to operate TPMS systems. However, adhesion of such a structure to the tire without any problems is difficult, and additionally, when the tire is needed to be changed, it is not practical to transfer the structure to another tire.

Japanese patent document no. JPH08310207 (A), an application in the state of the art, discloses a self-powered sensing module and a tire pressure monitoring system. By means of the said system, the requirement of changing the battery of the sensing module is eliminated and the maintenance cost is reduced. The power generation unit requires periodic deformation of the tire in order to generate electric power by the tires. Adhesion of such a structure to the tire without any problems is difficult, and additionally, when the tire is needed to be changed, it is not practical to transfer the structure to another tire.

United States patent document no. US 6 807 853 B2, an application in the state of the art, suggests providing a power generating structure to the tire by adding piezoelectric fiber composites. However this solution requires a completely new tire design.

United States patent application document no. US 2009/0134632 A1, an application in the state of the art, suggests adhesion of deformable chambers containing a fluid to the inner surface of the tire. As the surface of the tire, which contacts the ground, gets deformed; the chambers on the inner surface of the tire will also get deformed. By means of the mechanism provided in these chambers, the fluid is enabled to move within the chamber and in the meantime power is generated.
United States patent document no. US 3 699 367 A, a patent in the state of the art, suggests a device generating power by deformation of tire during rotation. A rigid and radially oriented piston, one end in contact with the inner surface of tire and the other end connected to a cog wheel, is depressed and expanded periodically during the motion of the car. This relative radial movement is converted to energy by means of an electromagnetic generator connected to the cog wheel. This design is using a rigid rod instead of a wire and conical spring system, therefore it is prone to damages in case of a flat tire.

In the United States patent application document no. US 2007/0063829 A1, an application in the state of the art, power is generated by means of placing a propeller on an air pressure area on the side surface of the wheel rim. It is stated in the said document that, upon rotation of the tire, position of the propeller will change according to the pressurized air within the tire and thus the propeller will rotate and generate the power required.

### Summary of the Invention

The objective of the present invention is to provide a power generation system which does not require any changes in the tire, does not require any intervention in the vehicle's chassis and has a practical installation system.

Another objective of the present invention is to provide a power generation system which does not have a very complicated structure and generates sufficient amount of electric power.

A further objective of the present invention is to provide a power generation system which does not require a new tire structure and production.

### Detailed Description of the Invention

A power generation system developed to fulfill the objective of the present invention is illustrated in the accompanying figures wherein:
- **Figure 1.**: is a perspective view of the electromechanical converter.
- **Figure 2.**: is a perspective view of the electromechanical converter.
- **Figure 3.**: is a perspective view of the electromechanical converter.
- **Figure 4.**: is a side view of the power generation system.
- **Figure 5.**: is a schematic view of the power generation system at the position where the tire is not deformed.
- **Figure 6.**: is a schematic view of the power generation system at the position where the tire is deformed.

The components in the figures are given reference numbers as follows:
**1.** Power generation system
**2.** Electromechanical converter (EMC)
**3.** Mechanical drive system (MDS)
**4.** Pulley
**5.** Pulley shaft
**6.** Torsion spring
**7.** Dynamo
**8.** Dynamo shaft
**9.** Wire
**10.** One way bearing
**11.** Flywheel
**12.** Conical spring
**13.** Lug
**14.** Ball
   **A.** Tire
   **C.** Wheel rim

A power generation system (1) which meets the power requirement of tire (A) pressure monitoring systems or similar systems that might be provided in the tire (A) which require power, basically comprises
- at least one pulley (4) which rotates around its axis by means of a rotational moment,
- at least one pulley shaft (5) which is provided at the center of the pulley (4) and rotates together with the pulley (4),
- at least one torsion spring (6) which is connected to the pulley shaft (5) and which forces the pulley shaft (5) for the pulley (4) to continuously come to the same position,
- at least one dynamo (7) which converts mechanical energy into electric energy by rotating around its own axis,
- at least one dynamo shaft (8), which is connected to the dynamo (7) and the pulley (4), and which transfers the rotation movement it receives from the pulley (4) to the dynamo (7),
- at least one wire (9) one end of which contacts the pulley (4) while the other one contacts the inner surface of the tire (A),
- at least one conical spring (12) which is arranged in order to enable the wire (9) to remain continuously stretched in the inner surface of the tire (A).

In another preferred embodiment of the invention, a power generation system (1) comprises
- at least one pulley (4) which rotates around its axis by means of a rotational moment,
- at least one pulley shaft (5) which is provided at the center of the pulley (4) and rotates together with the pulley (4),
- at least one torsion spring (6) which is connected to the pulley shaft (5) and which forces the pulley shaft (5) for the pulley (4) to continuously come to the same position,
- at least one one-way bearing (10) which is connected to one end of the pulley shaft (5) and which enables the rotation movement to be one way,
- at least one dynamo (7) which converts mechanical energy into electric energy b rotating around itself,
- at least one dynamo shaft (8), which is connected to the dynamo (7) and the one way bearing (10), and which transfers the rotation movement it receives from the one way bearing (10) to the dynamo (7),
- at least one wire (9) one end of which contacts the pulley (4) while the other one contacts the inner surface of the tire (A),
- at least one conical spring (12) which is arranged in order to enable the wire (9) to remain continuously stretched in the inner surface of the tire (A).

In a further preferred embodiment of the invention, a power generation system (1) comprises
- at least one pulley (4) which rotates around its axis by means of a rotational moment,
- at least one pulley shaft (5) which is provided at the center of the pulley (4) and rotates together with the pulley (4),
- at least one torsion spring (6) which is connected to the pulley shaft (5) and which forces the pulley shaft (5) for the pulley (4) to continuously come to the same position,
- at least one one-way bearing (10) which is connected to one end of the pulley shaft (5) and which enables the rotation movements to be one way,
- a flywheel (11) which is connected to the pulley shaft (5) and which enables continuity of the rotation movement coming from the one way bearing (10),
- at least one dynamo (7) which converts mechanical energy into electric energy b rotating around itself,
- at least one dynamo shaft (8), which is connected to the dynamo (7) and the flywheel (11), and which transfers the rotation movement it receives from the flywheel (11) to the dynamo (7),
- at least one wire (9) one end of which contacts the pulley (4) while the other one contacts the inner surface of the tire (A),
- at least one conical spring (12) which is arranged in order to enable the wire (9) to remain stretched in the inner surface of the tire (A).

The components constituting the power generation system (1) are basically listed under two main titles namely electro-mechanical converter (EMC) and mechanical drive system (MDS). The electro-mechanical converter (EMC) (2) basically comprises a pulley (4), pulley shaft (5), torsion spring (6), dynamo (7) and dynamo shaft (8). The mechanical drive system (MDS) (3) basically comprises a wire (9) and a conical spring (12).

There is provided a stretched wire (9) in between the tire (A) inner surface and the wheel rim (C) for all three electro-mechanical converters (EMC) (2) described above. In a preferred embodiment of the invention, rope is preferred instead of a wire (9). One end of the wire (9) contacts the inner surface of the tire (A) while the other end thereof contacts the pulley (4). A conical spring (12) is used in order to ensure that the end of the wire (9) continuously contacts the inner surface of the tire (A). The conical spring (12) enables the wire (9) to remain stretched continuously. Thus, initial installation of the power generation system and tire (A) replacement can easily be performed without requiring adhesion of the wire (9) to the tire (A). In the initial position, the conical spring (12) is stretched. One end of the spring (12) is connected to the end of the wire (9) and at the same time the said end contacts the tire's (A) inner surface and applies a force on the inner surface. In order to counteract wheel unbalance, at least two power generation systems, which are preferably symmetrical relative to the center, are used. During rotation of the wheel, at the position where the part of the wire that contacts the tire (A) (the contact point) arrives at the deflection area, pressure is applied on the conical spring (12) and the wire (9) is wound on the pulley (4). Thus the part of the wire (9) between the tire (A) and the wheel rim (C) becomes shorter. When the contact point is released from the deflection area, the pressure acting on the conical spring (12) is cancelled and the wire (9) on the pulley (4) is released to a certain extent. Thus the part of the wire (9) between the tire (A) and the wheel rim (C) returns to the same position, in other words it becomes longer. This process is repeated periodically during rotation of the wheel. On one side of the pulley (4), there is provided a torsion spring (6) which enables the pulley shaft (5) and thus the wire (9) to be always stretched. Upon rotation of the pulley (4), the pulley shaft (5) also rotates towards the same direction with the pulley (4). The one way bearing (10) enables to transfer the rotation movement provided by the pulley (4) to the dynamo (7) unidirectionally. In a preferred embodiment of the invention, a one-way coupling is used instead of the one-way bearing (10). This way the dynamo (7) can work more efficiently. The flywheel (11) enables the rotation movement at the dynamo shaft (8) connected to the dynamo (7) to be continuous. Thus the variabilities in power generation are mechanically reduced.

In a preferred embodiment of the invention, a gear box, which changes the angular velocity of the pulley shaft (5) located on the part of the pulley (4) where the dynamo (7) is located, is used.

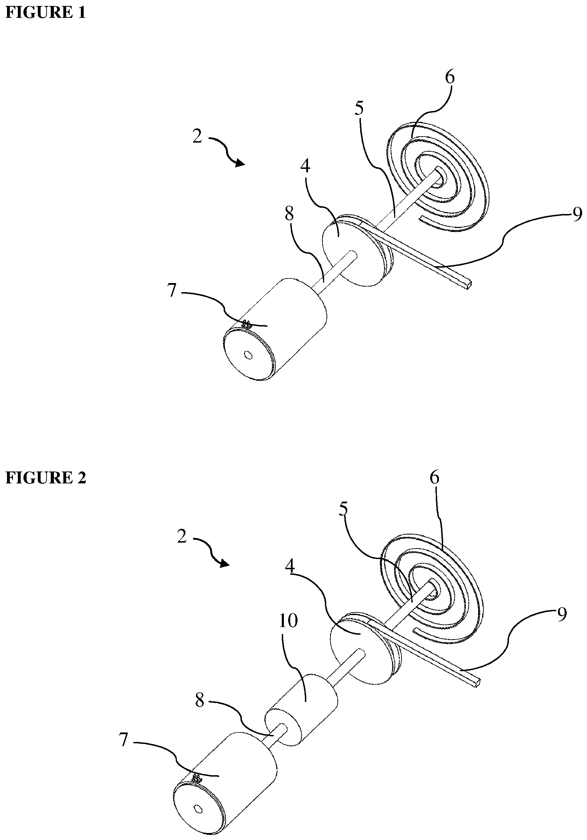

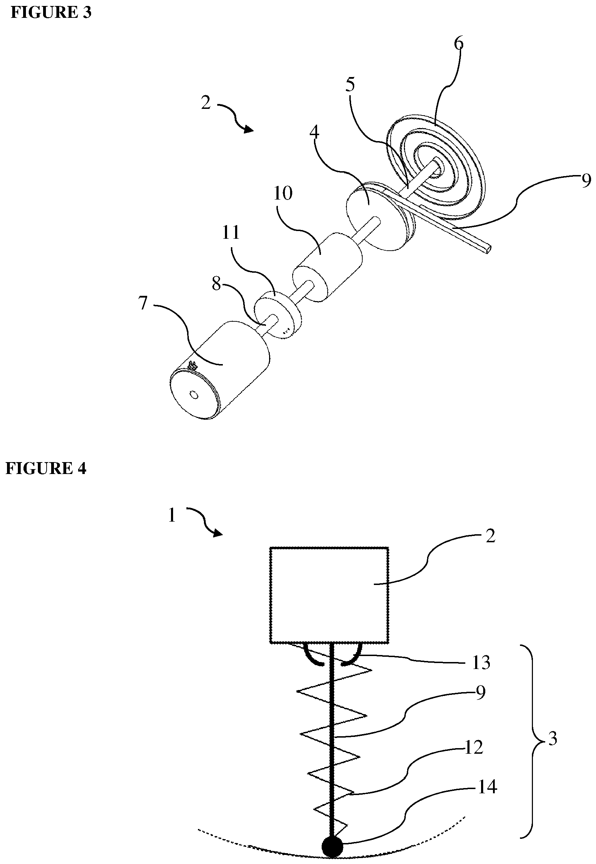

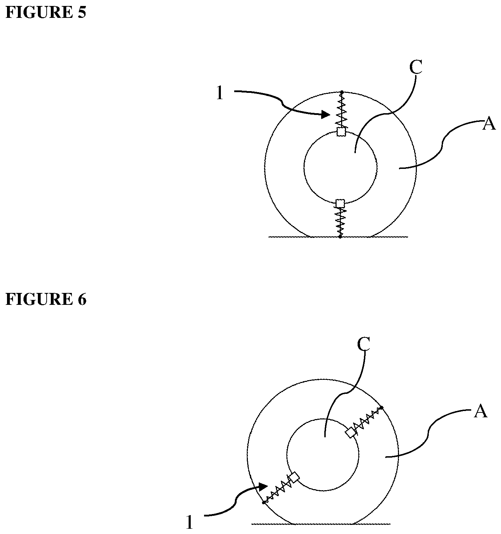

The mechanical drive system (3) and the electro-mechanical converter (2) basically comprise
- the electro-mechanical converter (2) shown in Figure 1, 4 or 5 and at least one lug (13) connected thereto,
- at least one conical spring (12) which starts from the electro-mechanical converter (2) and ends at the inner surface of the tire (A),
- at least one wire (9) which is wound on the pulley (4) of the electro-mechanical converter (2) and continues towards the lower end of the conical spring (12),
- a ball (14) which brings the ends of the wire (9) and the conical spring (12) together and is in contact with the tire (A) during use.

The conical form of the spring (12) prevents the wire (9) from slipping off the axis during use, and thus operation of the system becomes more stable. The ball (14) enables contact of the system without damaging the inner surface of the tire (A). The system will be positioned in the tire (A) and the ball (14) will be positioned in the lug (13). When the vehicle accelerates, the ball (14) will be released from the lug (13) due to the effect of the centrifugal force in the tire (A) and will contact the inner surface of the tire (A). Another contribution of the lug (13) to the system is seen in case of tire (A) blowouts. When the air of the tire (A) substantially decreases, the ball (14) will again enter between the lug (13), and thus the conical spring (12) will be safely compressed. This way the power generation system will not be damaged.

## Claims

1. A power generation system (1) which meets the power requirement of tire (A) pressure monitoring systems or similar systems that might be provided in the tire (A) which require power, basically **comprising**
- at least one dynamo (7) which converts mechanical energy into electric energy by rotating around its own axis,
- at least one dynamo shaft (8), which is connected to the dynamo (7), and **characterized by** at least one pulley (4), which can rotate around its own axis, and is connected to the dynamo (7) via the dynamo shaft (8),
- at least one pulley shaft (5) which is provided at the center of the pulley (4) and rotates together with the pulley (4),
- at least one wire (9) one end of which contacts the pulley (4) while the other one contacts the inner surface of the tire (A),
- at least one conical spring (12) which is arranged in order to enable the wire (9) to remain continuously stretched in the inner surface of the tire (A).

2. A power generation system (1) according to Claim 1, **characterized by** at least one torsion spring (6) which is connected to the pulley shaft (5) and which forces the pulley shaft (5) for the pulley (4) to continuously come to the same position.

3. A power generation system (1) according to Claim 1, **characterized by** at least one one-way bearing (10) which enables the rotation movement of the dynamo shaft (8) to be one way.

4. A power generation system (1) according to Claim 1, **characterized by** at least one flywheel (11) which enables the rotation movement of the dynamo shaft (8) to be continuous.

5. A power generation system (1) according to Claim 1, **characterized by** the conical spring (12), one end of which is connected to the end of the wire (9), and which at the same time contacts the inner surface of the tire (A) and applies force on the inner surface.

6. A power generation system (1) according to Claim 1, **characterized by** the wire (9) which is wound on the pulley (4) when a part thereof that contacts the tire (A) (the contact point) arrives at the deflection area during rotation of the wheel.

7. A power generation system (1) according to Claim 1, **characterized by** the wire (9) which is provided on the pulley (4) and is released to a certain extent due to the cancellation of the pressure acting on the conical spring (12) when the contact point is released from the deflection area.

8. A power generation system (1) according to Claim 1, **characterized by** the torsion spring (6) which is located on one side of the pulley (4), and which enables the pulley shaft (5) and thus the wire (9) to be always stretched.

9. A power generation system (1) according to Claim 1, **characterized by** at least one gear box which changes the angular velocity of the pulley shaft (5) located on the part of the pulley (4) where the dynamo (7) is located.

10. A power generation system (1) according to Claim 1, **characterized by** the flywheel (11) which enables the rotation movement of the dynamo shaft (8) connected to the dynamo (7) to be one-way and continuous.

11. A power generation system (1) according to Claim 1, **characterized by** at least one ball (14) which is located at the point where the conical spring (12) and the wire (9) are connected, and which enables contact without damaging the inner surface of the tire (A).

12. A power generation system (11) according to Claim 1, **characterized by** the lug (13) which, when the system is being initially installed or when the tire (A) blows out, prevents the conical spring (12) from being damaged by housing the ball (14).

## Patentansprüche

1. Stromerzeugungssystem (1), das bei den Reifen (A), die die elektrische Energie erfordern, den Energiebedarf der Druckkontrollsysteme des Reifens (A) und der ähnlichen Systemen deckt, **dadurch gekennzeichnet, dass** es
einen Stromerzeuger (7), der die mechanische Energie durch Drehen um seine Achse in die elektrische Energie umwandelt,
mindestens eine Stromerzeugerwelle (8) verbunden an dem Stromerzeuger (7) und mindestens eine Riemenscheibe (4), die wiederum um ihre Achse dreht, aufweist,
dass es mittels der Stromerzeugerwelle (8) an den Stromerzeuger (7) verbunden ist, und dass es mindestens eine Riemenscheibenwelle (5), die im Mitttelpunkt der Riemenscheibe (4) angeordnet ist und mit der Riemenscheibe (4) zusammen dreht, mindestens einen Draht (9), dessen ein Ende mit der Riemenscheibe (4) und dessen andere Ende mit der Innenfläche des Reifens (A) in Verbindung steht, mindestens eine konische Feder (12), die sicherstellt, dass der Draht (9) in der Innenfläche des Reifens (A) stets straff bleibt, aufweist

2. Stromerzeugungssystem (1) nach Anspruch 1 **gekennzeichnet durch** eine Torsionsfeder (6) die an die Riemenscheibenwelle (5) verbunden ist und sicherstellt, dass die Riemenscheibenwelle (5) für die Riemenscheibe (4) stets in die selbe Position gelangt.

3. Stromerzeugungssystem (1) nach Anspruch 1 **gekennzeichnet durch** mindestens ein unidirektionales Lager (10), das sicherstellt, dass die Drehrichtung der Stromerzugerwelle (8) unidirektional erstreckt.

4. Stromerzeugungssystem (1) nach Anspruch 1 **gekennzeichnet durch** mindestens einen Schwungrad (11), der sicherstellt, dass die Drehbewegung der Stromerzeugerwelle (8) kontinuierlich läuft.

5. Stromerzeugungssystem (1) nach Anspruch 1 **gekennzeichnet durch** mindestens eine konische Feder (12), die an einem Ende des Drahts (9) vebunden ist und glecihzeitig mit der Innenfläche des Reifens (A) in Verbindung steht sowie Kraft auf die Innenfläche ausübt.

6. Stromerzeugungssystem (1) nach Anspruch 1 **gekennzeichnet durch** den Draht (9), der während dem Drehen des Reifens (A) nach dem Erreichen an den Abweichungsbereich auf die Riemenscheibe (4) aufgewickelt wird, wenn ein Teil des Drahtes an den Reifen berührt (Kontaktpunkt).

7. Stromerzeugungssystem (1) nach Anspruch 1 **gekennzeichnet durch** den Draht (9), der bis einen bestimmten Abstand frei gelassen wird, da der Druck, der auf der Riemenscheibe (4) erzeugt wird und auf die konische Feder (12) wirkt, wenn der Kontaktpunkt aus dem Abweichungsbereich frei gelassen ist, ausgefallen wird.

8. Stromerzeugungssystem (1) nach Anspruch 1 **gekennzeichnet durch** die Torsionfeder (6), die sicherstellt, dass die Riemenscheibenwelle (5) auf der Seite der Riemenscheibe (4) und dadurch der Draht (9) stets straff bleibt.

9. Stromerzeugungssystem (1) nach Anspruch 1 **gekennzeichnet durch** mindestens ein Getriebe, das die Winkelgeschwindigkeit der Riemenscheibenwelle (5) im Bereich des Stromerzeugers (7), wo die Riemenscheibe (4) vorhanden ist, verändert.

10. Stromerzeugungssystem (1) nach Anspruch 1 **gekennzeichnet durch** einen Schwungrad (11), der sicherstellt, dass die Drehbewegung der Stromerzeugerwelle (8), die mit dem Stromerzeuger (7) verbunden ist, unidirektional erstreckt und kontinuierlich läuft

11. Stromerzeugungssystem (1) nach Anspruch 1 **gekennzeichnet durch** mindestens einen Kugel (14), die im Bereich, wo die konische Feder (12) und der Draht (9) miteinander verbunden sind, sich befindet und sicherstellt, dass ein Kontakt entsteht, ohne eine Beschädigung in der Innenfläche des Reifens (A) vorkommt.

12. Stromerzeugungssystem (1) nach Anspruch 1 **gekennzeichnet durch** mindestens einen Vorsprung (13), der sicherstellt, dass die konische Feder (12) nicht beschädigt wird, da bei der erstmaligen Installation des Systems oder Explosion des Reifens (A) die Kugel (14) geschützt ist.

## Revendications

1. Système de production d'énergie (1) qui répond aux exigences de puissance des systèmes de surveillance de la pression des pneus (A) ou des systèmes similaires qui pourraient être prévus dans le pneu (A) qui nécessitent de l'énergie, **comprenant** essentiellement au moins une dynamo (7) qui convertit l'énergie mécanique en énergie électrique en la faisant tourner autour de son propre axe,
au moins un arbre de dynamo (8) reliée à la dynamo (7) et **caractérisée par** au moins une poulie (4) pouvant tourner autour de son propre axe et reliée à la dynamo (7) par l'intermédiaire d'arbre de dynamo (8), au moins un arbre de poulie (5) qui est prévu au centre de la poulie (4) et qui tourne avec la poulie (4),
au moins un fil (9) dont une extrémité est en contact avec la poulie (4) tandis que l'autre est en contact avec la surface interne du pneu (A),
au moins un ressort conique (12) qui est agencé pour permettre au fil (9) de rester étiré en continu dans la surface interne du pneu (A).

2. Système de production d'énergie (1) selon la revendication 1, **caractérisé par** au moins un ressort de torsion (6) qui est relié à l'arbre de poulie (5) et qui force l'arbre de la poulie (5) pour la poulie (4) à venir continuellement dans la même position.

3. Système de production d'énergie (1) selon la revendication 1, **caractérisé par** au moins un palier unidirectionnel (10) qui permet le mouvement de rotation de l'arbre de dynamo (8) à sens unique.

4. Système de production d'énergie (1) selon la revendication 1, **caractérisé par** au moins un volant (11) qui permet au mouvement de rotation de l'arbre de dynamo (8) d'être continu.

5. Système de production d'énergie (1) selon la revendication 1, **caractérisé par** le ressort conique (12), dont une extrémité est reliée à l'extrémité du fil (9) et qui en même temps touche la surface interne du pneu (A) et applique une force sur la surface interne.

6. Système de production d'énergie (1) selon la revendication 1, **caractérisé par** le fil (9) qui est enroulé sur la poulie (4) lorsqu'une partie de celle-ci entre en contact avec le pneu (A) (le point de contact) rotation de la roue.

7. Système de production d'énergie (1) selon la revendication 1, **caractérisé par** le fil (9) qui est prévu sur la poulie (4) est libéré dans une certaine mesure par l'annulation de la pression agissant sur le ressort conique (12) lorsque le point de contact est libéré de la zone de déviation.

8. Système de production d'énergie (1) selon la revendication 1, **caractérisé par** le ressort de torsion (6) qui est situé d'un côté de la poulie (4) et qui permet à l'arbre de poulie (5) et donc au fil (9) être toujours étiré.

9. Système de production d'énergie (1) selon la revendication 1, **caractérisé par** au moins une boîte à engrenage qui modifie la vitesse angulaire de l'arbre de poulie (5) situé sur la partie de la poulie (4) où se trouve la dynamo (7).

10. Système de production d'énergie (1) selon la revendication 1, **caractérisé par** le volant (11) qui permet au mouvement de rotation de l'arbre dynamo (8) relié à la dynamo (7) d'être unidirectionnel et continu.

11. Système de production d'énergie (1) selon la revendication 1, **caractérisé par** au moins une bille (14) qui est située à l'endroit où le ressort conique (12) et le fil (9) sont connectés, et qui permet le contact sans endommager le surface interne du pneu (A).

12. Système de production d'énergie (11) selon la revendication 1, **caractérisé par** la patte (13) qui, lorsque le système est installé initialement ou lorsque le pneu (A) souffle, empêche le ressort conique (12) d'être endommagé par le boîtier la bille (14).
